# DEMANDE DE BREVET EUROPEEN

(11) **EP 4 311 720 A1**
(43) Date de publication de la demande: **31.01.2024**
(21) Numéro de dépôt: 23186800.1
(22) Date de dépôt: 20.07.2023
(51) Int. Cl.: B60N 2/08, B60N 2/90, B60N 2/02

(54) **SYSTEME DE VERROUILLAGE D'UNE GLISSIERE A REGLAGE CONTINU**

(30) Priorité: 26.07.2022 FR 2207697
(71) Demandeur: FAURECIA Sièges d'Automobile, 92000 Nanterre (FR)
(72) Inventeur: PETIT, Fabrice, 61100 FLERS (FR); NARDIN, Vincent, 61100 FLERS (FR); KIRCHER, Olivier, 61100 ST GEORGES DES GROSEILLIERS (FR)
(74) Mandataire: Plasseraud IP

(57) **Abrégé**

Système (1) de verrouillage d'au moins une glissière à réglage continu pour siège de véhicule, comprenant ;
- ladite au moins une glissière (2),
- un système de verrouillage par arc-boutement comprenant :
-- un rail, fixe par rapport au premier élément de glissière,
-- des moyens élastiques générant des forces de rappel configurées pour assurer un basculement au verrouillage d'un premier organe de blocage de sorte à assurer un arc-boutement dudit premier organe de blocage sur le rail (3) et un basculement au verrouillage d'un deuxième organe de blocage (5) assurant un arc-boutement dudit deuxième organe de blocage sur le rail (3)

Selon la présente divulgation, un mécanisme de déverrouillage comprend un actionneur électrique (AT) et une transmission (TR) configurés pour assurer le basculement au déverrouillage du premier organe de blocage (4) et le basculement (5) au déverrouillage du deuxième organe de blocage, à l'encontre des forces de rappel des moyens élastiques.

## Description

La présente divulgation est relative à un système de verrouillage d'une glissière pour siège de véhicule à réglage continu, ainsi qu'à un siège de véhicule comportant un tel système de verrouillage

### Domaine technique

La présente divulgation relève du domaine des systèmes de réglage et de verrouillage d'une glissière pour véhicule automobile. Elle concerne plus particulièrement les systèmes de réglage dont les glissières relient une assise du siège au plancher du véhicule.

Dans la présente divulgation, et de manière connue un siège de véhicule peut comporter typiquement :
- une assise, qui s'étend suivant une direction X, depuis un bord avant et jusqu'à un bord arrière, et s'étend transversalement suivant une direction Y, depuis un premier bord latéral jusqu'à un deuxième bord latéral,
- un dossier qui s'étend en hauteur depuis le bord arrière de l'assise, suivant une direction Z, verticale, ou inclinée typiquement vers arrière, depuis un bord inférieur jusqu'à un bord supérieur du dossier, et s'étend transversalement suivant une direction Y, depuis un premier bord latéral, jusqu'à un deuxième bord latéral.

Le dossier peut être inclinable par rapport à l'assise, typiquement par un axe de pivot entre l'armature de dossier et l'armature d'assise, s'étendant suivant la direction transversale Y.

La position du siège dans le véhicule peut être typiquement réglée, suivant la direction X, par l'intermédiaire d'un système de réglage et de verrouillage selon la présente divulgation, voire de préférence deux systèmes de réglage et de verrouillage, avec deux glissières reliant en parallèle l'assise au plancher du véhicule.

Ainsi, la ou chacune des deux glissières comporte deux éléments de glissières avec un premier élément de glissière solidaire du plancher, typiquement un profilé inférieur, et un second élément de glissière solidaire de l'assise du siège, typiquement un profilé supérieur, les deux éléments de glissières étant configurés pour coulisser l'un par rapport à l'autre suivant la direction X.

Le système de réglage et de verrouillage comprend encore un système de verrou, y compris un organe de commande qui est sollicité, typiquement manuellement ou de manière motorisée, pour déverrouiller la glissière afin de permettre à l'occupant du siège de régler la position du siège par déplacement du premier élément de glissière, mobile, par rapport audit deuxième élément de glissière.

Une fois la position du siège réglée, l'organe de commande est relâché pour assurer le verrouillage du siège dans des positions de réglage correspondant à des pas de réglage de la glissière.

A cet effet, l'état de la technique connaît les systèmes de verrouillage à réglage discontinu qui présentent un système de verrou comportant un support, solidaire du deuxième élément de glissière, et des organes de blocage, mobiles par rapport au support, configurés pour venir pénétrer des ouvertures de réglage solidaires du premier élément de glissière dans un état de verrouillage du système de verrou, sous l'action de moyens élastiques tels que des ressorts. L'organe de commande, lorsque actionné, permet de contraindre les organes de blocage à l'encontre de la force des ressorts et ainsi d'extraire les organes de blocage des ouvertures de réglage, libérant le coulissement de la glissière.

Il est ainsi connu une première famille de système de verrou, usuellement désigné par l'homme du métier par l'appellation anglaise « *step lock* » pour laquelle les organes de blocage, typiquement solidaires les uns des autres, n'assurent le blocage la glissière que si la position relative entre les deux éléments de glissière, premier élément de glissière, et deuxième élément de glissière correspond à un pas de réglage de la glissière

Il est encore connu une deuxième famille de système de verrou, de sécurité améliorée par rapport à la première famille, usuellement désignée par l'homme du métier sous l'appellation anglaise « *instant lock* » qui assure toujours un blocage des deux éléments de la glissière, et même si la position entre les deux éléments de glissière, premier élément de glissière et deuxième élément de glissière est dans une position intermédiaire quelconque entre deux positions de réglage consécutifs.

A cet effet, les organes de blocage sont indépendants les uns des autres configurés de sorte qu'un au moins des organes vienne pénétrer et se bloquer dans l'une des ouvertures de réglage, typiquement oblongues, et même si la glissière est dans cette position intermédiaire quelconque, entre deux pas de réglage, à savoir deux positions de réglage consécutives de la glissière.

La glissière ne peut alors plus que coulisser sur une course correspondant au pas de réglage de la glissière. Un léger coulissement du premier élément de glissière par rapport au deuxième élément de glissière permet aux autres organes de blocage non pénétrants de venir en regard et de se verrouiller dans les ouvertures de réglage lorsque la glissière est déplacée dans l"une (ou l'autre) des deux positions de réglage consécutives, afin d'obtenir le verrouillage de la glissière. Dans les deux cas qu'il s'agisse de système de verrou du type « *step lock »* ou du type « *instant lock* », le nombre de position de réglage est limité au nombre de positions de verrouillage permise par le pas de réglage du système.

La présente divulgation s'intéresse toutefois au système de glissière verrouillage à réglage continu, à savoir assurant un nombre illimité de positions de réglage sur la longueur de la glissière, et par opposition au système de réglage et de verrouillage précédemment décrit, à réglage discontinu.

### Technique antérieure

Il est connu de l'état de la technique en particulier des documents US 2003/0227207, DE 2 301 042 ou encore US 2,292,718 des systèmes de verrouillage à réglage continu pour siège de véhicule automobile.

De tels systèmes comprennent un rail, solidaire d'une première partie fixe de la glissière, solidaire d'un plancher du véhicule et d'un couple d'organe bloqueur, y compris un premier organe de blocage et un deuxième organe de blocage solidaires d'une deuxième partie mobile de la glissière solidaire du châssis d'assise du siège.

Dans une première position relative entre le premier organe de blocage et le deuxième organe de blocage, correspondant au déverrouillage du système, le premier et deuxième organe bloqueur sont configurés pour se déplacer librement le long du rail, sans blocage, autorisant un libre coulissement de la glissière.

Dans une seconde position relative entre le premier organe bloqueur et le deuxième organe bloqueur viennent s'arcbouter sur le rail dans les conditions d'arc-boutement suivantes avec génération:
- d'un premier effort généré par un premier appui de la deuxième partie de glissière sur le premier organe de blocage assurant un arc-boutement dudit premier organe de blocage sur le rail assurant un verrouillage du deuxième élément de glissière par rapport au premier élément de glissière dans un premier sens de coulissement, par deux réactions dudit rail sur ledit premier organe de blocage, avec d'une part, une première réaction entre une première surface supérieure de frottement du rail et une première paroi dudit premier organe de frottement et, d'autre part, une deuxième réaction entre une deuxième surface de frottement inférieure du rail et une deuxième paroi dudit premier organe de blocage,
- d'un deuxième effort généré par le deuxième appui sur le deuxième organe de blocage assure un arc-boutement dudit deuxième organe de blocage sur le rail assurant un verrouillage du deuxième élément de glissière par rapport au premier élément de glissière dans un deuxième sens de coulissement, par deux réactions dudit rail sur ledit deuxième organe de blocage, avec d'une part, une troisième réaction entre le première surface supérieure de frottement du rail et la troisième paroi dudit deuxième organe de frottement et, d'autre part, une quatrième réaction entre la deuxième surface de frottement inférieure du rail et la quatrième paroi dudit deuxième organe de blocage.

Selon les constatations des inventeurs, un tel état de la technique peut être amélioré.

### Résumé

La présente divulgation vient améliorer au moins tout ou partie de la situation.

Il est proposé un système de verrouillage d'au moins une glissière à réglage continu pour siège de véhicule, comprenant ;
- ladite au moins une glissière, en particulier une première glissière et une deuxième glissière, parallèles entre elles, ladite au moins une glissière, en particulier ladite premier glissière ou ladite deuxième glissière, comprenant un premier élément de glissière, inférieur, configuré pour être fixé à un plancher du véhicule, et un deuxième élément de glissière, supérieur, configuré pour coulisser le long du premier élément de glissière
- un système de verrouillage par arc-boutement comprenant :
   -- un rail, s'étendant en longueur le long de ladite au moins une glissière, fixe par rapport au premier élément de glissière, ledit rail présentant une première surface de frottement, supérieure et une deuxième surface de frottement, inférieure, opposée
   -- un premier organe de blocage et un deuxième organe de blocage, montés solidaire du deuxième élément de glissière, de positions décalées suivant un axe longitudinale du rail, le premier organe de blocage comprenant une première paroi et une deuxième paroi, en regard, configurées pour frotter respectivement sur la première surface et la deuxième surface de frottement du rail, le deuxième organe de blocage comprenant une troisième paroi et une quatrième paroi, en regard, configurées pour frotter respectivement sur la première surface et la deuxième surface de frottement du rail,
- des moyens élastiques générant des forces de rappel configurées pour assurer :
   -- un basculement au verrouillage du premier organe de blocage de sorte à assurer un arc-boutement dudit premier organe de blocage sur le rail assurant un verrouillage du deuxième élément de glissière par rapport au premier élément de glissière dans un premier sens de coulissement, par deux réactions dudit rail sur ledit premier organe de blocage, avec d'une part, une première réaction entre la première surface supérieure de frottement du rail et la première paroi dudit premier organe de blocage et, d'autre part, une deuxième réaction entre la deuxième surface de frottement inférieure du rail et la deuxième paroi dudit premier organe de blocage,
   -- un basculement au verrouillage du deuxième organe de blocage assurant un arc-boutement dudit deuxième organe de blocage sur le rail assurant un verrouillage du deuxième élément de glissière par rapport au premier élément de glissière dans un deuxième sens de coulissement, par deux réactions dudit rail sur ledit deuxième organe de blocage, avec d'une part, une troisième réaction entre le première surface supérieure de frottement du rail et la troisième paroi dudit deuxième organe de blocage et, d'autre part, une quatrième réaction entre la deuxième surface de frottement inférieure du rail et la quatrième paroi dudit deuxième organe de blocage, - un mécanisme de déverrouillage qui est configuré pour entraîner, d'une part, un basculement au déverrouillage du premier organe de blocage libérant le coulissement de la glissière dans le sens S1, et d'autre part, un basculement au déverrouillage du deuxième organe de blocage libérant le coulissement de la glissière dans le sens S2.

Selon la présente divulgation, ledit mécanisme de déverrouillage comprend un actionneur électrique et une transmission couplée à l'actionneur, l'actionneur électrique et la transmission étant configurés pour assurer le basculement au déverrouillage du premier organe de blocage et le basculement au déverrouillage du deuxième organe de blocage, à l'encontre des forces de rappel des moyens élastiques.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- le premier élément de glissière est un profilé inférieur et le deuxième élément de glissière est un profilé supérieur, monté coulissant le long du profilé inférieur, le premier organe de blocage et le deuxième organe de blocage s'étendant intérieurement dans l'inter-espace entre le profilé supérieur et le profilé inférieur , ledit rail solidaire du profilé inférieur, reçu dans ledit inter-espace, et le cas échéant le premier organe de blocage (et le deuxième organe de blocage dépassent du profilé supérieur au travers d'au moins une ouverture du profilé supérieur ;
- l'actionneur électrique est embarqué sur le profilé supérieur mobile, à l'extérieur en dehors de l'inter-espace entre le profilé supérieur et le profilé inférieur, de préférence le profilé inférieur présentant une section avec une base s'étendant sensiblement suivant un plan parallèle au plan XY, prolongée par une voire deux ailes montantes et le profilé supérieur, présentant une section, avec une aile principale s'étendant sensiblement suivant un plan parallèle au plan XY, prolongée par deux ailes descendantes et dans lequel l'actionneur électrique est agencé supérieur à ladite aile principale ;
- l'actionneur électrique comprend une première partie fixe par rapport au profilé supérieur et une partie mobile , en translation par rapport à la partie fixe , connectée à la transmission, et dans lequel la partie mobile est déplaçable en translation selon une direction qui est, par exemple parallèle à la direction de coulissement de la glissière, ou une direction inclinée par rapport à la direction de coulissement, par exemple de plus ou moins 15°, en particulier autour d'une direction transversale Y ;
- ladite transmission comprend une barre de commande, solidaire du profilé supérieur de glissière de ladite au moins une glissière, montée rotative autour d'un axe de rotation de la barre de commande suivant une direction transversale Y à ladite au moins une glissière, de préférence la barre de commande (BAR) reliant les profilés supérieurs (des deux glissières en synchronisant le déverrouillage du premier organe de blocage et du deuxième organe de blocage internes à l'inter-espace des profilés supérieur et inférieur de la première glissière, d'une part, et le déverrouillage du premier organe de blocage et du deuxième organe de blocage internes à l'inter-espace des profilés supérieur et inférieur de la deuxième glissière , d'autre part, lorsque ladite au moins une glissière comprend les deux glissières consistant en la première glissière et en la deuxième glissière ;
- la partie mobile en translation de l'actionneur électrique est liée à la barre de commande par l'intermédiaire d'un levier s'étendant radialement à la barre de commande, le levier solidaire en rotation à la barre de commande, la partie mobile et le levier étant liés par un axe solidaire de la partie mobile, configuré pour se déplacer selon une course limitée, dans un trou oblong du levier, pour assurer la rotation du levier par rapport au profilé supérieur de ladite au moins une glissière lors de la translation de la partie mobile ;
- la partie mobile présentant une fourche comprenant une première branche et une deuxième branche entre lesquelles est intercalé le levier, ledit axe reliant la première branche et la deuxième branche, en traversant le trou oblong du levier ;
- ladite au moins une glissière comprend la première glissière et la deuxième glissière, ladite commande reliant les profilés supérieurs des deux glissières en synchronisant le déverrouillage des premier organe et deuxième organe de blocage internes à l'inter-espace des profilés supérieur et inférieur de la première glissière, d'une part, et le déverrouillage des premier organe de blocage et deuxième organe de blocage internes à l'inter-espace des profilés supérieur et inférieur de la deuxième glissière, d'autre part, ledit actionneur étant un actionneur unique solidaire du profilé supérieur de la première glissière ou solidaire de la deuxième glissière configuré pour assurer le déverrouillage des organes de blocage des deux glissières consistant en la première glissière et de la deuxième glissière par l'intermédiaire de la barre de commande ;
- le système est configuré de sorte que le travail fourni par l'actionneur électrique pour assurer le basculement au verrouillage des premier et deuxième organe de blocage de ladite au moins une glissière est inférieur à 0,1 Joule par glissière, en particulier inférieur à 0,2 joule pour assurer les basculement au déverrouillage simultanés des premier et deuxième organe de blocage associés à la première glissière et à la deuxième glissière. Cela autorise l'utilisation d'actionneur l'électrique peu puissant, par exemple d'une puissance nominale inférieure à 10 Watts, voire de puissance nominale inférieure à 5 Watts.

Selon un second aspect, la présente divulgation est relative à un siège de véhicule comprenant une assise et un dossier ainsi qu'un système de verrouillage à réglage continu selon la présente divulgation dont le premier élément de glissière est ancré à un plancher du véhicule et le deuxième élément de glissière est solidaire d'un châssis de l'assise.

### Brève description des dessins

D'autres caractéristiques, détails et avantages apparaîtront à la lecture de la description détaillée ci-après, et à l'analyse des dessins annexés, sur lesquels :

D'autres caractéristiques, détails et avantages apparaîtront à la lecture de la description détaillée ci-après, et à l'analyse des dessins annexés, sur lesquels :
**Fig. 1**

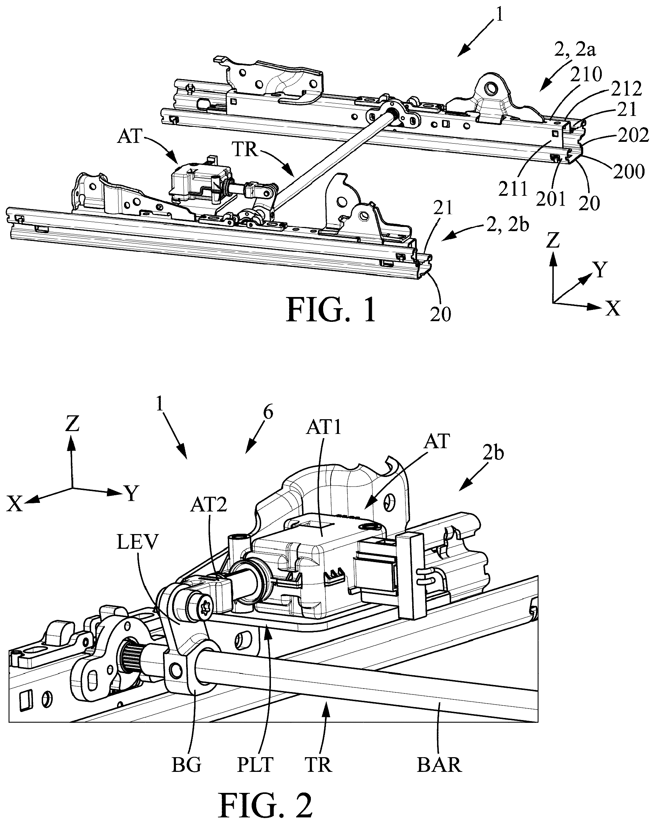

   [Fig. 1] est une vue en perspective d'un système de verrouillage d'au moins une glissière à réglage continu comprenant une première glissière, gauche et une deuxième glissière, droite, chacune comportant :
   - d'une part, un premier élément de glissière, inférieur, formé par un profilé inférieur, et un deuxième élément de glissière, supérieur, formé par un profilé supérieur, et d'autre part :
   - un système de verrouillage par arc-boutement comprenant :
      -- un rail, s'étendant en longueur le long de ladite au moins une glissière, fixe par rapport au premier élément de glissière,
      -- un premier organe de blocage et un deuxième organe de blocage, montés solidaire du deuxième élément de glissière, de positions décalées suivant un axe longitudinale du rail,
      -- des moyens élastiques générant des forces de rappel configurées pour assurer, d'une part, un basculement au verrouillage du premier organe de blocage de sorte à assurer un arc-boutement dudit premier organe de blocage sur le rail assurant un verrouillage du deuxième élément de glissière par rapport au premier élément de glissière dans un premier sens S1, et d'autre part, un basculement au verrouillage du deuxième organe de blocage assurant un arc-boutement dudit deuxième organe de blocage sur le rail assurant un verrouillage du deuxième élément de glissière par rapport au premier élément de glissière dans un deuxième sens S2 de coulissement,
   - un mécanisme de déverrouillage qui est configuré pour entraîner, d'une part, un basculement au déverrouillage du premier organe de blocage libérant le coulissement de la glissière dans le sens S1, et d'autre part, un basculement au déverrouillage du deuxième organe de blocage libérant le coulissement de la glissière dans le sens S2, ledit mécanisme comprenant un actionneur électrique et une transmission couplée à l'actionneur, l'actionneur électrique et la transmission étant configurés pour assurer le basculement au déverrouillage du premier organe de blocage et le basculement au déverrouillage du deuxième organe de blocage, à l'encontre des forces de rappel des moyens élastiques appartenant aux deux glissières droite et gauche, ledit actionneur comprenant une partie fixe solidaire du deuxième élément de glissière (droite telle qu'illustrée à titre d'exemple) et une partie mobile, déplaçable en translation, qui est couplée à un levier de commande s'étendant radialement d'un arbre de commande reliant les profilés supérieur des première et deuxième glissières, l'arbre s'étendant longitudinalement suivant une direction transversale Y.
**Fig. 2**

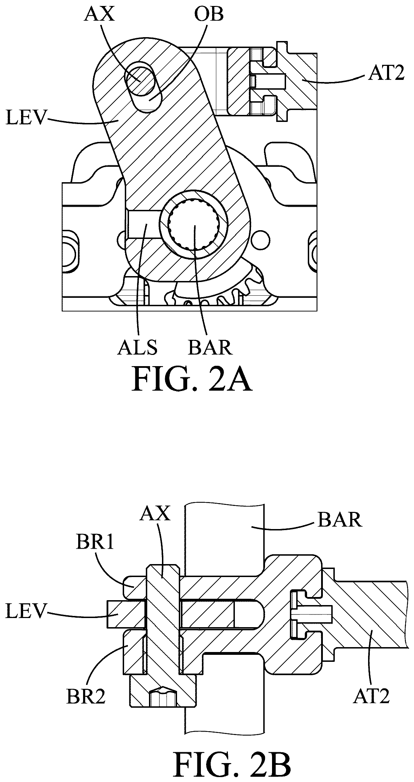

   [Fig. 2] est une vue détail de l'actionneur qui comprend un partie fixe solidaire du profilé supérieur de la glissière (droite), la partie fixe logeant un moteur, en particulier un motoréducteur, et une partie mobile, déplaçable en translation, suivant une direction parallèle à la direction de coulissement, connectée par une fourche au niveau d'une extrémité distale du levier de commande, l'extrémité proximale du levier couplée en rotation à la barre de commande.
**Fig. 2A**
   [Fig. 2A] est une vue de coupe du système selon un plan de coupe parallèle au plan XZ, donc perpendiculaire à la barre transversale, le plan passant par le levier, illustrant, une part :
   - la liaison entre la partie mobile et le levier, qui comprend un trou oblong s'étendant le long du levier de commande, et un axe de la partie mobile, traversant le trou oblong,
   - la liaison entre la barre de commande et le levier, qui comprend une circonférence notamment striée de la barre de commande, et une bague de l'extrémité proximale du levier de commande, traversée par le levier de commande, la bague venant enchâsser la circonférence de la barre de commande, la bague comprenant un alésage taraudé, orienté radialement à la barre, pour une vis de serrage assurant le verrouillage de position de la bague sur la barre de commande.
**Fig. 2B**
   [Fig. 2B] est une de coupe selon un plan horizontal passant par l'extrémité distale du levier au niveau de la liaison entre une fourche de la partie mobile de l'actionneur, d'une part, et l'extrémité distale, et qui comprend l'axe s'étendant transversalement entre les deux branches de la fourche, l'axe traversant le trou oblong du levier.
**Fig. 3**

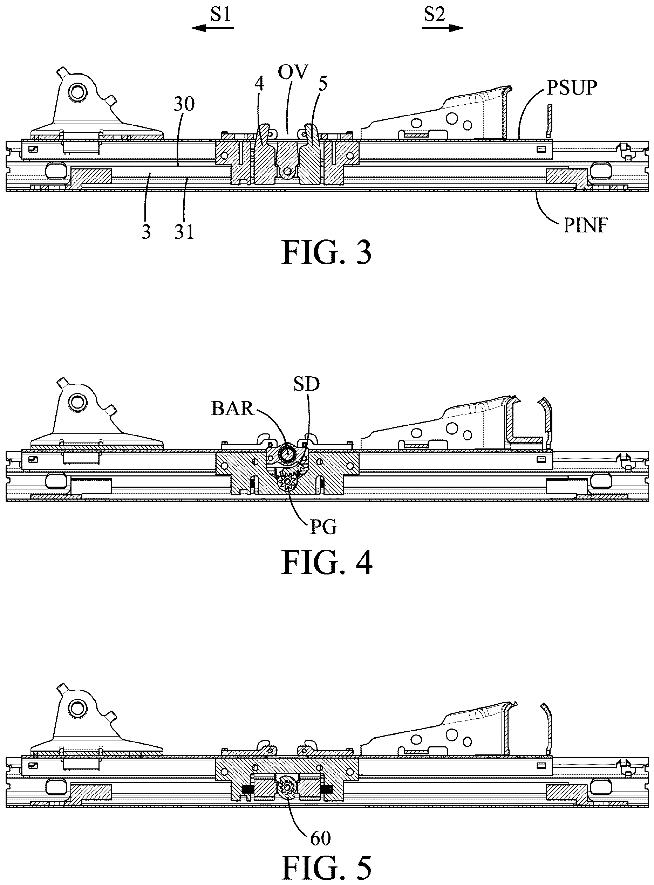

   [Fig. 3] est vue une de coupe selon un plan XZ passant par une glissière, illustrant le rail solidaire du profilé inférieur de la glissière, et le premier organe de blocage et le deuxième organe de blocage solidaire du profilé supérieur de glissière.
**Fig. 4**
   [Fig. 4] est une vue selon un plan de coupe voisin de celui de la figure 3, illustrant un engrenage de la transmission, comprenant un première section dentée interne à la glissière, solidaire en rotation de la barre de commande, engrenant avec un pignon denté solidaire d'une came de déverrouillage.
**Fig. 5**
   [Fig. 5] est une vue selon un plan de coupe voisin de celui de la figure 4, illustrant la came de déverrouillage, dans une première position autorisant le blocage du premier et deuxième organe de blocage, contraints au basculement pas les moyens élastiques dans leur position de verrouillage, la came configurée pour être pivotée par l'actionneur et la transmission jusqu'à une position assurant les basculement au déverrouillage du premier et deuxième organe de blocage de la glissière.
**Fig. 6**

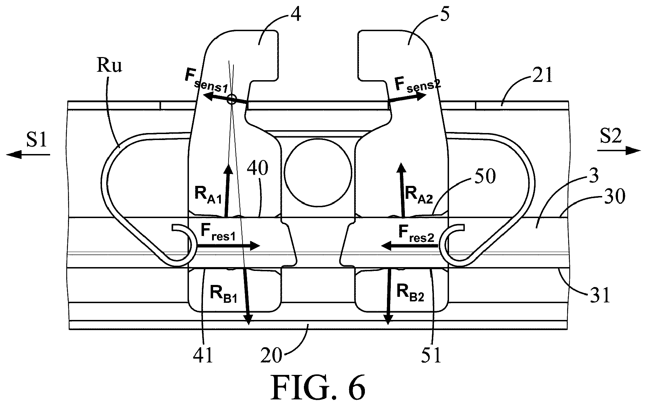

   [Fig. 6] est un mode de réalisation de la présente divulgation selon un premier mode de réalisation des conditions d'arc-boutement du premier et deuxième organe de blocage sur le rail.
**Fig. 7**

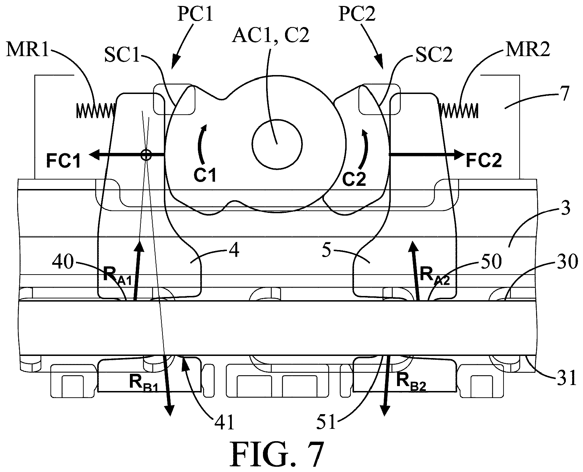

   [Fig. 7] est un mode de réalisation de la présente divulgation selon un seconde mode de réalisation des conditions d'arc-boutement du premier et deuxième organe de blocage sur le rail, à titre d'exemple alternatif à celui de la figure 6.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aux figures, le repère orthogonal XYZ est orienté de sorte que l'axe X soit orienté suivant l'axe de coulissement de la glissière, la direction Y suivant la direction horizontale, et transversale à la glissière, perpendiculaire à X, et l'axe Z selon la verticale.

Aussi, la présente divulgation est relative à un système 1 de verrouillage d'au moins une glissière à réglage continu pour siège de véhicule, comprenant ;
- ladite au moins une glissière 2, en particulier une première glissière 2a et une deuxième glissière 2b, parallèles entre elles, ladite au moins une glissière, en particulier ladite premier glissière ou/ou ladite deuxième glissière, comprenant un premier élément de glissière 20, inférieur, configuré pour être fixé à un plancher du véhicule, et un deuxième élément de glissière 21, supérieur, configuré pour coulisser le long du premier élément de glissière
- un système de verrouillage par arc-boutement comprenant :
   -- un rail 3, s'étendant en longueur le long de ladite au moins une glissière, le cas échéant la première glissière 2a ou la deuxième glissière , fixe par rapport au premier élément de glissière, ledit rail présentant une première surface de frottement 30, supérieure et une deuxième surface de frottement, inférieure 31, opposée
   -- un premier organe de blocage 4 et un deuxième organe de blocage 5, montés solidaire du deuxième élément de glissière 21, de positions décalées suivant un axe longitudinale du rail 3, le premier organe de blocage 4 comprenant une première paroi 40 et une deuxième paroi 41 en regard, configurées pour frotter respectivement sur la première surface 30 et la deuxième surface de frottement 31 du rail, le deuxième organe de blocage 5 comprenant une troisième paroi 50 et une quatrième paroi 51, en regard, configurées pour frotter respectivement sur la première surface 30 et la deuxième surface de frottement 31 du rail 3.

Le système 1 de verrouillage comprend encore des moyens élastiques générant des forces de rappel configurées pour assurer :
-- un basculement au verrouillage du premier organe de blocage 4 de sorte à assurer un arc-boutement dudit premier organe de blocage 4 sur le rail 3 assurant un verrouillage du deuxième élément de glissière par rapport au premier élément de glissière dans un premier sens S1 de coulissement, par deux réactions dudit rail sur ledit premier organe de blocage, avec d'une part, une première réaction RA1 entre la première surface supérieure 30 de frottement du rail et la première paroi 40 dudit premier organe de blocage 4 et, d'autre part, une deuxième réaction RB1 entre la deuxième surface de frottement 31 inférieure du rail et la deuxième paroi 41 dudit premier organe de blocage 4,
-- un basculement au verrouillage du deuxième organe de blocage 5 assurant un arc-boutement dudit deuxième organe de blocage 5 sur le rail 3 assurant un verrouillage du deuxième élément de glissière 21 par rapport au premier élément de glissière 20 dans un deuxième sens S2 de coulissement, par deux réactions dudit rail sur ledit deuxième organe de blocage, avec d'une part, une troisième réaction RA2 entre le première surface supérieure de frottement 30 du rail et la troisième paroi 5 dudit deuxième organe de blocage 5 et, d'autre part, une quatrième réaction RB2 entre la deuxième surface de frottement 31 inférieure du rail et la quatrième paroi 51 dudit deuxième organe de blocage 5.

Le système comprend encore un mécanisme de déverrouillage 6 qui est configuré pour entraîner, d'une part, un basculement au déverrouillage du premier organe de blocage 4 libérant le coulissement de la glissière dans le sens S1, et d'autre part, un basculement au déverrouillage du deuxième organe de blocage 5, libérant le coulissement de la glissière dans le sens S2

La figure 6 illustre un premier mode de réalisation possible des conditions d'arc-boutement pour lequel le système comporte le premier élément de glissière 20, fixe et le deuxième élément de glissière 21, ainsi que le rail 3 solidaire du premier élément de glissière fixe, ainsi que les deux organes de blocage premier organe de blocage 4 et deuxième organe de blocage 5 qui peuvent basculer d'une première position relative (écartée) autorisant le libre coulissement de la glissière jusqu'à une deuxième position (rapprochée sous l'action des moyens élastique, typiquement un élément ressort Ru à la figure 6), assurant le verrouillage de la glissière.

La figure 6 illustre la deuxième position relative entre le premier organe de blocage 4 et le deuxième organe blocage 5 qui viennent s'arcbouter sur le rail 3, sous l'action de élément ressort Ru générant un effort Fᵣₑₛ₁ sur le premier organe de blocage 4, et générant un effort Fᵣₑₛ₂ sur le deuxième organe de blocage 4 tendant à rapprocher le premier organe de blocage 4 et le deuxième organe de blocage 5 dans des conditions d'arc-boutement sur le rail, avec génération :
- d'un premier effort Fₛₑₙₛ₁ généré par un premier appui de la deuxième partie de glissière 21 sur le premier organe de blocage 4 assurant un arc-boutement dudit premier organe de blocage 4 sur le rail 3 avec verrouillage du deuxième élément de glissière 21, supérieur par rapport au premier élément de glissière 20, inférieur dans un premier sens S1 de coulissement, par deux réactions dudit rail sur ledit premier organe de blocage, avec d'une part, une première réaction R_{A1} entre une première surface supérieure de frottement du rail et une première paroi dudit premier organe de frottement et, d'autre part, une deuxième réaction R_{B1} entre une deuxième surface de frottement inférieure du rail et une deuxième paroi dudit premier organe de blocage,
- d'un deuxième effort Fₛₑₙₛ₂ généré par un deuxième appui sur le deuxième organe de blocage 5 assurant un arc-boutement dudit deuxième organe de blocage 5 sur le rail 3 avec verrouillage du deuxième élément de glissière par rapport au premier élément de glissière dans un deuxième sens S2 de coulissement, par deux réactions dudit rail sur ledit deuxième organe de blocage 5, avec d'une part, une troisième réaction R_{A2} entre le première surface supérieure de frottement du rail et la troisième paroi dudit deuxième organe de frottement et, d'autre part, une quatrième réaction R_{B2} entre la deuxième surface de frottement inférieure du rail et la quatrième paroi dudit deuxième organe de blocage.

Selon de tels conditions d'arc-boutement, les basculements du verrouillage du premier organe de blocage 4 et du deuxième organe de blocage 5 sont obtenus en écartant le premier organe de blocage 4 et le deuxième organe de blocage l'un de l'autre, suivant la direction de coulissement, et par exemple au moyen d'un organe de déverrouillage 60, qui prend la forme d'une came de déverrouillage, pivotante, intercalée entre les deux organes de blocage 4, 5 et tel que par exemple selon le mode de réalisation de la figure 5.

La figure 7 illustre un second mode de réalisation possible des conditions d'arcboutement : le système de verrouillage comprend de manière totalement indépendantes deux cames, avec une première came C1, et une deuxième came C2, solidaires du deuxième élément de glissière 21, monté par exemple pivotantes sur un support 7.

Des premiers moyens élastiques (non illustrés) sont configurés pour déplacer la première came C1 typiquement en rotation pour assurer un contact avec ledit premier organe de blocage 4 en générant un premier effort FC1 entre le premier organe de blocage 4 et ladite première came C1 assurant un arc-boutement dudit premier organe de blocage 4 sur le rail 3 assurant un verrouillage du deuxième élément de glissière par rapport au premier élément de glissière dans un premier sens S1 de coulissement, par deux réactions dudit rail sur ledit premier organe de blocage, avec d'une part, une première réaction R_{A1} entre la première surface supérieure 30 de frottement du rail et la première paroi 40 dudit premier organe de blocage 4 et, d'autre part, une deuxième réaction R_{B1} entre la deuxième surface de frottement 31 inférieure du rail et la deuxième paroi 41 dudit premier organe de blocage 4.

Des deuxièmes moyens élastiques (non illustrés) sont configurés pour déplacer la deuxième came C2, typiquement en rotation, pour assurer un contact avec ledit deuxième organe de blocage 5 en générant un deuxième effort FC2 entre le deuxième organe de blocage 5 et ladite deuxième came C2 assurant un arc-boutement dudit deuxième organe de blocage 5 sur le rail 3 assurant un verrouillage du deuxième élément de glissière 21 par rapport au premier élément de glissière 20 dans un deuxième sens S2 de coulissement, par deux réactions dudit rail sur ledit deuxième organe de blocage, avec d'une part, une troisième réaction R_{A2} entre le première surface supérieure de frottement 30 du rail et la troisième paroi 50 dudit deuxième organe de blocage et, d'autre part, une quatrième réaction R_{B2} entre la deuxième surface de frottement 31 inférieure du rail et la quatrième paroi 51 dudit deuxième organe de blocage 5.

Un tel mode de réalisation est avantageux en particulier par rapport à celui de la figure 6, en ce que la première came C1 et la deuxième came C3 peuvent être configurées pour, lors d'une sollicitation longitudinale sur la deuxième élément de glissière générant un micro déplacement entre le deuxième élément de glissière et le premier élément de glissière, garantir toujours le premier effort FC1 et le deuxième effort FC2 assurant les arc-boutement du premier organe de blocage et du deuxième organe de blocage 4 5, en autorisant des compensations par déplacement d'une des deux cames, voire des deux cames, première came et/ou respectivement deuxième came, en changeant le point de contact entre ladite came et l'organe blocage constitué par le premier organe de blocage ou respectivement le deuxième organe de blocage, alors que l'autre came deuxième came ou respectivement première came peut rester immobile en conservant le point de contact entre la came et ledit organe de blocage constitué par le premier organe de blocage ou respectivement le deuxième organe de blocage.

Autrement dit, les première came C1 et deuxième came C2 peuvent opérer, indépendamment l'une de l'autre, respectivement une première compensation sur le premier organe de blocage 4 et/ou une deuxième compensation sur le deuxième organe de blocage 5 en fonction des sollicitations longitudinales et en particulier de leur sens.

De manière générale, la première came C1 et la deuxième came C2 peuvent être articulées sur un support 7 solidaire du deuxième élément la glissière mobile 21, la première came C1 et la deuxième came C2 configurées pour pivoter de manière indépendante, sur le support sous l'action des premiers et second moyens élastiques.

La première came C1 peut comporter une première surface de came SC1, excentrique, configurée pour venir en contact avec le premier élément de blocage 4, de rayon croissant entre le centre de pivot de la première came C1, et le point de contact avec le premier élément de blocage 4, lors du pivotement selon le sens de rotation imposé par les premiers moyens élastiques.

La deuxième came C2 peut comporter une deuxième surface de came SC2, excentrique, configurée pour venir en contact avec le deuxième élément de blocage 4, de rayon croissant entre le centre de pivot de la deuxième came C2, et le point de contact avec le deuxième élément de blocage 5, lors du pivotement selon le sens de rotation imposé par les deuxièmes moyens élastiques.

La première came C1 et la deuxième came C2 peuvent être articulées au support, en partageant un même axe de pivot AC1 C2 s'étendant suivant une direction transversale. Un tel mode de réalisation est avantageux en termes de compacité (suivant la direction longitudinale X). Les premiers moyens élastiques et les seconds moyens élastiques peuvent encore comprendre un même organe ressort reliant entre elles la première came C1 et la deuxième came C2, tel qu'un ressort de torsion.

Selon un tel mode de réalisation, le mécanisme de déverrouillage 6 est configuré pour entraîner le déplacement de la première came C1 et le déplacement de la deuxième came C2 depuis leurs positions contraintes par les premiers et seconds (ou deuxièmes) moyens élastiques assurant les arc-boutement du premier organe de blocage 4 et du deuxième organe de blocage 5 sur le rail et ainsi le verrouillage de la glissière et jusqu'à une position escamotée de la première came C1 et une position escamotée de la deuxième came C2 supprimant les arcs-boutements du premier organe de blocage et du deuxième organe sur le rail, libérant le coulissement de la glissière.

A la figure 7, les flèches associées au première et deuxième came, indiquent les sens de rotation des cames, imposés par les moyens élastique, notamment premier moyen et deuxième moyen élastique, provoquant le verrouillage de la glissière. Le déverrouillage est donc obtenu par un déplacement de la première came C1 et un déplacement de la deuxième came C2, respectivement selon des sens de rotation opposés.

Le système selon ce second mode de réalisation peut encore comporter :
- des premiers moyens ressorts MR1 entre ladite deuxième élément de glissière 21 et ledit premier organe de blocage 4 de sorte que le premier organe de blocage 4 est toujours en contact avec la première came 4 même dans la position escamotée de la première came C1 libérant le coulissement de la glissière, et,
- des deuxièmes moyens ressorts MR2 entre ladite deuxième élément de glissière 21 et ledit deuxième organe de blocage 5 de sorte que le deuxième organe de blocage 5 est toujours en contact avec la deuxième came C2 même dans la position escamotée de la deuxième came C2 libérant le coulissement de la glissière.

En conséquence, les contacts entre, d'une part, la première came C1 et le premier élément de blocage 4, et d'autre part, entre la deuxième came C2 et la deuxième de blocage 5 ne sont jamais perdus, au fur et à mesure, des verrouillages/déverrouillages de la glissière.

Selon la présente divulgation, en particulier qu'il s'agisse notamment du premier mode de réalisation de la figure 6 ou encore du second mode de réalisation de la figure 7, ledit mécanisme de déverrouillage 6 comprend un actionneur électrique AT et une transmission TR couplée à l'actionneur AT.

L'actionneur électrique AT et la transmission sont configurés pour assurer le basculement au déverrouillage du premier organe de blocage 4 et le basculement 5 au déverrouillage du deuxième organe de blocage 5, à l'encontre des forces de rappel des moyens élastiques, et en particulier des premiers et deuxièmes moyens élastique associés aux première et deuxième cames C2 s'agissant du second mode de réalisation.

L'actionneur électrique AT et la transmission TR peuvent encore être configurés pour assurer le déplacement inverse, en vue d'autoriser de nouveau les moyens élastiques à provoquer le basculement au verrouillage du premier organe de blocage 4 et le basculement au verrouillage du deuxième organe de blocage 5. De manière générale, l'actionneur AT peut comprendre un moteur comprenant un stator et un rotor, voire typiquement un réducteur, connecté au rotor.

Le premier élément de glissière 20 peut être un profilé inférieur PINF et le deuxième élément de glissière 21 peut être un profilé supérieur PSUP, monté coulissant le long du profilé inférieur PINF.

De manière générale, le premier organe de blocage 4 et le deuxième organe de blocage 5 peuvent s'étendre intérieurement dans l'inter-espace entre le profilé supérieur PSUP et le profilé inférieur PINF, ledit rail 3 solidaire du profilé inférieur PINF, reçu dans ledit inter-espace, et le cas échéant le premier organe de blocage 4 et le deuxième organe de blocage 5 dépassent du profilé supérieur au travers d'au moins une ouverture Ov du profilé supérieur PSUP.

De manière générale, l'actionneur électrique AT peut être embarqué sur le profilé supérieur SUP mobile, à l'extérieur en dehors de l'inter-espace entre le profilé supérieur SUP et le profilé inférieur INF.

De manière générale, le profilé inférieur PINF peut présenter une section avec une base 200 s'étendant sensiblement suivant un plan parallèle au plan XY, prolongée par une voire deux ailes montantes 201, 202 et le profilé supérieur PSUP, présentant une section, avec une aile principale 210 s'étendant sensiblement suivant un plan parallèle au plan XY, prolongée par deux ailes descendantes 211, 212. L'actionneur électrique AT peut être agencé supérieur à ladite aile principale 210.

Une platine PLT peut assurer la fixation de l'actionneur AT sur le profilé supérieur PCT de ladite au moins une glissière 2, en particulier sur la première glissière 2a ou la deuxième glissière 2b, comme illustrées à titre d'exemple à la figure 1.

La platine peut être une équerre, qui comprend une première aile fixée sur une aile descendante 211 du profilé supérieur PSUP et une deuxième aile, perpendiculaire à la première aile, formant une surface de support horizontale pour une partie fixe AT1 de l'actionneur AT.

De manière générale, la platine PLT permet de positionner l'actionneur AT, en porte à faux, du profilé supérieur PSUP de la glissière suivant la direction transversale Y, en particulier de la première glissière 2a ou de la deuxième glissière 2b. L'actionneur AT est alors typiquement intercalé entre la première glissière 2a et la deuxième glissière 2b, suivant la direction transversale Y.

L'actionneur électrique AT peut comprendre une première partie fixe AT1 par rapport au profilé supérieur PSUP et une partie mobile AT2, en translation par rapport à la partie fixe AT1, connectée à la transmission. Lorsque la partie fixe AT1 comprend un moteur avec un stator et un rotor, voire un réducteur typiquement à engrenage, ledit actionneur peut comprendre des moyens pour transformer le mouvement de rotation du rotor, voire le mouvement de rotation de la sortie du réducteur en un mouvement de translation de la partie mobile AT2. De tels moyens peuvent comprend à titre d'exemple, un système vis-écrou, un engrenage crémaillère/pignon ou autres.

La partie mobile AT2 est déplaçable en translation typiquement selon une direction qui est, par exemple parallèle à la direction X de coulissement de la glissière, ou une suivant une direction inclinée par rapport à la direction de coulissement, par exemple de plus ou moins 15°, en particulier autour d'une direction transversale Y.

Ladite transmission peut comprendre une barre de commande BAR, solidaire du profilé supérieur PUSP de glissière de ladite au moins une glissière, montée rotative autour d'un axe de rotation de la barre de commande BAR suivant une direction transversale Y à ladite au moins une glissière 2.

De préférence la barre de commande BAR relie les profilés supérieurs PUSP des deux glissières en synchronisant le déverrouillage des premier organe 4 et deuxième organe de blocage 5 internes à l'inter-espace des profilés supérieur et inférieur de la première glissière 2a, d'une part, et le déverrouillage du premier organe de blocage 4 et deuxième organe de blocage 5 internes à l'inter-espace des profilés supérieur et inférieur de la deuxième glissière 2b, d'autre part.

Ledit actionneur AT est de préférence un actionneur unique solidaire du profilé supérieur de la première glissière 2a (ou solidaire de la deuxième glissière 2b) configuré pour assurer le déverrouillage des organes de blocage (premier et deuxième organe de blocages 4,5) des deux glissières consistant en la première glissière 2a et de la deuxième glissière 2b par l'intermédiaire de la barre de commande.

La partie mobile AT2 en translation de l'actionneur électrique peut être liée à la barre de commande BAR par l'intermédiaire d'un levier LEV s'étendant à la barre de commande BAR de préférence suivant une direction radiale.

Le levier LEV est solidaire en rotation e la barre de commande BAR, la partie mobile AT2 et le levier LEV étant liés par un axe AX solidaire de la partie mobile AT2. Cet axe AX est configuré pour se déplacer selon une course limitée, dans un trou oblong OB du levier LEV illustré à titre d'exemple à la figure 2A, pour assurer la rotation du levier par rapport au profilé supérieur PSUP de ladite au moins une glissière lors de la translation de la partie mobile AT2.

Comme illustré à la figure 2B, la partie mobile AT2 peut présenter une fourche comprenant une première branche BR et une deuxième branche BR2 entre lesquelles est intercalé le levier LEV au niveau de son extrémité distale. Ledit axe AX relie la première branche BR1 et la deuxième branche BR2, en traversant le trou oblong OB du levier. Ledit axe s'étend typiquement suivant la direction transversale Y.

La liaison entre la barre de commande BAR et le levier LEV peut comprendre une circonférence, notamment striée de la barre, de commande BAR, et une bague BG de l'extrémité proximale du levier de commande LEV. La bague BG est traversée par le levier de commande BAR, la bague venant enchâsser la circonférence de la barre de commande. La bague BG peut comprendre un alésage taraudé ALS pour une vis de serrage assurant le verrouillage de la bague sur la barre de commande.

La barre de commande BAR peut traverser le profilé supérieur PSUP et entraîner notamment directement un secteur denté SD engrenant avec un pignon PG, solidaire de l'organe de déverrouillage 60, en particulier la came de déverrouillage, rotative. L'actionneur AT permet, lorsqu'activé, de pivoter la barre de commande autour de son axe, et ainsi de pivoter l'organe de déverrouillage 60 afin d'assurer l'écartement du premier organe de blocage et du deuxième organe de blocage 5, et ainsi leur basculement au déverrouillage, et selon la premier mode de réalisation de conditions d'arc-boutement illustré à la figure 6.

Selon le mode de réalisation de la figure 7, l'actionneur AT, permet, lorsqu'activé, de pivoter la première came C1 et la deuxième came C2, suivant les sens opposés aux sens imposés par les premiers et deuxièmes moyens élastiques.

La configuration selon la figure 7 a fait l'objet du dépôt de la demande de brevet FR2205919 qui divulgue un mode de réalisation de la commande au déverrouillage de la première came et de la deuxième came déplacées simultanément par un organe de commande, mobile selon une course limitée en translation, suivant une direction verticale Z, par rapport au support 7. Cet organe de commande est configuré pour passer d'une première de repos, haute, jusqu'à une deuxième position basse, configuré pour provoquer les déplacements simultanés de la première came et de la deuxième came de leur position contrainte par les premiers et deuxièmes moyens élastiques assurant les conditions d'arc-boutement, jusqu'à leur position escamotée, libérant le coulissement de la glissière.

A cet effet, l'organe de commande comporte deux surfaces d'appui venant simultanément en appui, sur un premier plot, saillant de la première came et un deuxième plot saillant de la deuxième came, et de sorte à entraîner les rotations des cames en des sens opposés.

Selon un tel mode de réalisation, le déplacement verticale de l'organe de commande, monté coulissant suivant la direction verticale C par rapport au support peut être obtenu par la rotation de la barre de commande, grâce à un système de came, entre la barre de commande BAR et l'organe de commande, afin de transformer la rotation de la barre de commande, en un mouvement de descente en translation de l'organe de commande, qui commande à son tour simultanément, les rotations des deux cames, première came C1 et deuxième came C2, en des sens de rotation opposés.

De manière avantageuse, le système peut être configuré de sorte que le travail fourni par l'actionneur électrique AT pour assurer le basculement au verrouillage des premier et deuxième organe de blocage de ladite au moins une glissière est inférieur à 0,1 Joule par glissière, en particulier inférieur à 0,2 joule pour assurer les basculement au déverrouillage simultanés des premier et deuxième organe de blocage associés à la première glissière 2a et à la deuxième glissière 2b.

Il est ainsi possible de motoriser le système avec des moteurs électriques très peu puissant et donc très peu consommateur en énergie électrique.

En particulier, l'actionneur électrique AT en particulier le moteur électrique de l'actionneur peut présenter une puissance nominale inférieure à 10 Watts, et en particulier une puissance nominale inférieure à 5 Watts.

La présente divulgation est encore relative à un siège de véhicule comprenant une assise et un dossier ainsi qu'un système 1 de verrouillage à réglage continu selon la présente divulgation dont le premier élément de glissière 20 est ancré à un plancher du véhicule et le deuxième élément de glissière 21 est solidaire d'un châssis de l'assise.

### Liste des signes de référence

- 1 : Système de verrouillage d'une glissière pour véhicule à réglage continu,
- 2. Glissière
- 20. Premier élément de glissière,
- 200. Base,
- 201, 202. Ailes montantes
- PINF. Profilé inférieur,
- 21. Deuxième élément de glissière,
- 210. Aile principale,
- 211,212. Ailes descendantes
- PSUP. Profilé supérieur
- 3. Rail,
- 30. Première surface de frottement,
- 31. Deuxième surface de frottement,
- 4. Premier organe de blocage,
- 40,41. Respectivement première paroi et deuxième paroi (configurées pour s'arcbouter sur le rail),
- 5. Deuxième organe de blocage,
- 50,51. Respectivement troisième paroi et quatrième paroi (configurées pour s'arcbouter sur le rail),
- S1, S2. Respectivement premier sens et deuxième sens pour le déplacement du deuxième élément de glissière, mobile par rapport au premier élément de glissière,
- 6. Moyens de déverrouillage,
- 60. Organe de déverrouillage,
- AT. Actionneur,
- AT1, AT2. Partie fixe et partie mobile (actionneur)
- TR. Transmission,
- BAR. Barre de commande,
- LEV. Levier,
- C1. Première came,
- C2. Deuxième came,
- SC1. Surface de came, excentrique (première came),
- SC2. Surface de came, excentrique (deuxième came),
- FC1. Premier effort entre la première came et le premier organe de blocage 4 généré par les premiers moyens élastiques,
- FC2. Deuxième effort entre la deuxième came et le deuxième organe de blocage 5 généré par les deuxième moyens élastiques,
- 60. Organe de commande au déverrouillage,
- PL1, PL2. Premier et deuxième plot (appartenant à la première came et à la deuxième came et coopérant avec l'organe de commande 60),
- 7 Support,
- Ov. Ouverture (du profilé supérieur pour les organes de verrouillage),
- PLT. Platine (fixation de l'actionneur au profilé supérieur de la glissière),
- RA1, RB1. Première et deuxième réactions (arc-boutement du premier organe de blocage 4),
- RA2, RB2. Troisième et quatrième réactions (arc-boutement du premier organe de blocage 4),

.

## Revendications

1. Système (1) de verrouillage d'au moins une glissière à réglage continu pour siège de véhicule, comprenant ;
- ladite au moins une glissière (2), en particulier une première glissière (2a) et une deuxième glissière (2b), parallèles entre elles, ladite au moins une glissière, en particulier ladite premier glissière ou ladite deuxième glissière, comprenant un premier élément de glissière (20), inférieur, configuré pour être fixé à un plancher du véhicule, et un deuxième élément de glissière (21), supérieur, configuré pour coulisser le long du premier élément de glissière
- un système de verrouillage par arc-boutement comprenant :
-- un rail (3), s'étendant en longueur le long de ladite au moins une glissière, fixe par rapport au premier élément de glissière, ledit rail présentant une première surface de frottement (30), supérieure et une deuxième surface de frottement, inférieure (31), opposée
-- un premier organe de blocage (4) et un deuxième organe de blocage (5), montés solidaire du deuxième élément de glissière (21), de positions décalées suivant un axe longitudinale du rail (3), le premier organe de blocage (4) comprenant une première paroi (40) et une deuxième paroi (41), en regard, configurées pour frotter respectivement sur la première surface (30) et la deuxième surface de frottement (31) du rail, le deuxième organe de blocage (5) comprenant une troisième paroi (50) et une quatrième paroi (51), en regard, configurées pour frotter respectivement sur la première surface (30) et la deuxième surface de frottement (31) du rail (3),
- des moyens élastiques générant des forces de rappel configurées pour assurer :
-- un basculement au verrouillage du premier organe de blocage (4) de sorte à assurer un arc-boutement dudit premier organe de blocage (4) sur le rail (3) assurant un verrouillage du deuxième élément de glissière par rapport au premier élément de glissière dans un premier sens (S1) de coulissement, par deux réactions dudit rail sur ledit premier organe de blocage, avec d'une part, une première réaction (R_{A1}) entre la première surface supérieure (30) de frottement du rail et la première paroi (40) dudit premier organe de blocage (4) et, d'autre part, une deuxième réaction (R_{B1}) entre la deuxième surface de frottement (31) inférieure du rail et la deuxième paroi (41) dudit premier organe de blocage (4) ,
-- un basculement au verrouillage du deuxième organe de blocage (5) assurant un arc-boutement dudit deuxième organe de blocage (5) sur le rail (3) assurant un verrouillage du deuxième élément de glissière (21) par rapport au premier élément de glissière (20) dans un deuxième sens (S2) de coulissement, par deux réactions dudit rail sur ledit deuxième organe de blocage, avec d'une part, une troisième réaction (R_{A2}) entre le première surface supérieure de frottement (30) du rail et la troisième paroi (50) dudit deuxième organe de blocage (5) et, d'autre part, une quatrième réaction (R_{B2}) entre la deuxième surface de frottement (31) inférieure du rail et la quatrième paroi (51) dudit deuxième organe de blocage (5),
- un mécanisme de déverrouillage (6) qui est configuré pour entraîner, d'une part, un basculement au déverrouillage du premier organe de blocage (4) libérant le coulissement de la glissière dans le sens S1, et d'autre part, un basculement au déverrouillage du deuxième organe de blocage (5) libérant le coulissement de la glissière dans le sens S2
**caractérisé en ce que** ledit mécanisme de déverrouillage (6) comprend un actionneur électrique (AT) et une transmission (TR) couplée à l'actionneur (AT), l'actionneur électrique et la transmission étant configurés pour assurer le basculement au déverrouillage du premier organe de blocage (4) et le basculement (5) au déverrouillage du deuxième organe de blocage, à l'encontre des forces de rappel des moyens élastiques.

2. Système de verrouillage selon la revendication 1 dans lequel le premier élément de glissière (20) est un profilé inférieur (PINF) et le deuxième élément de glissière (21) est un profilé supérieur (PSUP), monté coulissant le long du profilé inférieur (PINF), le premier organe de blocage (4) et le deuxième organe de blocage (5) s'étendant intérieurement dans l'inter-espace entre le profilé supérieur (PSUP) et le profilé inférieur (PINF), ledit rail solidaire du profilé inférieur (PINF), reçu dans ledit inter-espace, et le cas échéant le premier organe de blocage (4) et le deuxième organe de blocage (5) dépassent du profilé supérieur au travers d'au moins une ouverture (Ov) du profilé supérieur (PSUP).

3. Système de verrouillage selon revendication 2, dans lequel l'actionneur électrique (AT) est embarqué sur le profilé supérieur (SUP) mobile, à l'extérieur en dehors de l'inter-espace entre le profilé supérieur (SUP) et le profilé inférieur (INF), de préférence le profilé inférieur (PINF) présentant une section avec une base (200) s'étendant sensiblement suivant un plan parallèle au plan XY, prolongée par une voire deux ailes montantes (201, 202) et le profilé supérieur (PSUP), présentant une section, avec une aile principale (210) s'étendant sensiblement suivant un plan parallèle au plan XY, prolongée par deux ailes descendantes (211, 212) et dans lequel l'actionneur électrique est agencé supérieur à ladite aile principale (210).

4. Système de verrouillage selon la revendication 3, dans lequel ledit actionneur électrique (AT) comprend une première partie fixe (AT1) par rapport au profilé supérieur (PSUP) et une partie mobile (AT2), en translation par rapport à la partie fixe (AT1), connectée à la transmission, et dans lequel la partie mobile (AT2) est déplaçable en translation selon une direction qui est, par exemple parallèle à la direction de coulissement de la glissière, ou une direction inclinée par rapport à la direction de coulissement, par exemple de plus ou moins 15°, en particulier autour d'une direction transversale Y.

5. Système de verrouillage selon la revendication 4, dans lequel ladite transmission comprend une barre de commande (BAR), solidaire du profilé supérieur (PUSP) de glissière de ladite au moins une glissière, montée rotative autour d'un axe de rotation de la barre de commande (BAR) suivant une direction transversale Y à ladite au moins une glissière (2), de préférence la barre de commande (BAR) reliant les profilés supérieurs (PUSP) des deux glissières en synchronisant le déverrouillage du premier organe de blocage (4) et du deuxième organe de blocage (5) internes à l'inter-espace des profilés supérieur et inférieur de la première glissière (2a), d'une part, et le déverrouillage du premier organe de blocage (4) et du deuxième organe de blocage (5) internes à l'inter-espace des profilés supérieur et inférieur de la deuxième glissière (2b), d'autre part, lorsque ladite au moins une glissière comprend les deux glissières consistant en la première glissière (2a) et en la deuxième glissière (2a).

6. Système de verrouillage selon la revendication 5, dans lequel la partie mobile (AT2) en translation de l'actionneur électrique est liée à la barre de commande (BAR) par l'intermédiaire d'un levier (LEV) s'étendant radialement à la barre de commande, le levier solidaire en rotation à la barre de commande, la partie mobile et le levier étant liés par un axe (AX) solidaire de la partie mobile (AT2), configuré pour se déplacer selon une course limitée, dans un trou oblong (OB) du levier (LEV), pour assurer la rotation du levier par rapport au profilé supérieur de ladite au moins une glissière lors de la translation de la partie mobile.

7. Système de verrouillage selon la revendication 6, dans lequel la partie mobile (AT2) présentant une fourche comprenant une première branche (BR1) et une deuxième branche (BR2) entre lesquelles est intercalé le levier (LEV), ledit axe (AX) reliant la première branche (BR1) et la deuxième branche (BR2), en traversant le trou oblong (OB) du levier.

8. Système de verrouillage selon l'une des revendications 5 à 7, dans lequel ladite au moins une glissière (2) comprend la première glissière (2a) et la deuxième glissière (2b), ladite commande (BAR) reliant les profilés supérieurs (PUSP) des deux glissières en synchronisant le déverrouillage des premier organe (4) et deuxième organe de blocage (5) internes à l'inter-espace des profilés supérieur et inférieur de la première glissière (2a), d'une part, et le déverrouillage des premier organe de blocage (4) et deuxième organe de blocage (5) internes à l'inter-espace des profilés supérieur et inférieur de la deuxième glissière (2b), d'autre part, ledit actionneur (AT) étant un actionneur unique solidaire du profilé supérieur de la première glissière (2a) ou solidaire de la deuxième glissière (2b) configuré pour assurer le déverrouillage des organes de blocage des deux glissières consistant en la première glissière et de la deuxième glissière par l'intermédiaire de la barre de commande.

9. Système selon l'une des revendications 1 à 8, configuré de sorte que le travail fourni par l'actionneur électrique (AT) pour assurer le basculement au verrouillage des premier et deuxième organe de blocage de ladite au moins une glissière est inférieur à 0,1 Joule par glissière, en particulier inférieur à 0,2 joule pour assurer les basculement au déverrouillage simultanés des premier et deuxième organe de blocage associés à la première glissière (2a) et à la deuxième glissière (2b).

10. Siège de véhicule comprenant une assise et un dossier ainsi qu'un système (1) de verrouillage à réglage continu selon l'une des revendications 1 à 9 dont le premier élément de glissière (20) est ancré à un plancher du véhicule et le deuxième élément de glissière (21) est solidaire d'un châssis de l'assise.
